**Europäisches Patentamt**

**European Patent Office**

**Office européen des brevets**

(19)

(11) Veröffentlichungsnummer: **0 255 706 B1**

# EUROPÄISCHE PATENTSCHRIFT

(12)

(45) Veröffentlichungstag der Patentschrift: **13.03.91**

(51) Int. Cl.⁵: **F02B 67/06**, F16H 7/14

(21) Anmeldenummer: **87111088.8**

(22) Anmeldetag: **31.07.87**

(54) **Einstellvorrichtung für lageverstellbar verbundene Bauteile, insbesondere Spannvorrichtung für Hüllgetriebe.**

(30) Priorität: **05.08.86 DE 3626528**

(43) Veröffentlichungstag der Anmeldung:
**10.02.88 Patentblatt 88/06**

(45) Bekanntmachung des Hinweises auf die
Patenterteilung:
**13.03.91 Patentblatt 91/11**

(84) Benannte Vertragsstaaten:
**DE ES FR GB IT SE**

(56) Entgegenhaltungen:
EP-A- 0 075 659          DE-A- 2 940 875
DE-A- 3 322 769          GB-A- 2 022 191
US-A- 1 737 467          US-A- 2 479 617

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Fischer, Adolf
Wieselweg 17
W-8013 Haar(DE)**

(74) Vertreter: **Bücken, Helmut
Bayerische Motoren Werke Aktiengesellschaft Postfach 40 02 40 Petuelring 130 -
AJ-30
W-8000 München 40(DE)**

## Beschreibung

Die Erfindung geht gemäß dem Oberbegriff des Patentanspruches 1 von der DE-A-33 22 769 aus.

Bei dieser bekannten Einstellvorrichtung zum Spannen eines endlosen Zugmittels eines Hüllgetriebes bei einer Brennkraftmaschine wird das hierfür lageverstellbare Bauteil relativ zu einem stationären Bauteil mittels eines als Schraubgelenk dienenden Schraubbolzens in einer zur Ebene des Hüllgetriebes in etwa parallelen Kippebene verstellt. Zur Sicherung der für die gewünschte Zugmittelspannung gegebenen Position des lageverstellbaren Bauteiles dient eine Feststellschraube, die - quer zur Kippebene angeordnet - das lageverstellbare Bauteil am stationären Bauteil festlegt. Die Bedienung des Schraubbolzens und der Feststellschraube erfolgt in zwei zueinander quer gerichteten Handhabungsebenen, die in nachteiliger Weise viel Platz erfordern.

Eine weiteres Ausführungsbeispiel eines Schraubgelenkes für eine Einstellvorrichtung ist aus der DE-A-29 40 875 bekannt.

Diese Schrift zeigt und beschreibt ein an einer Brennkraftmaschine schwenkbar angeordnetes Aggregat, das ebenfalls über ein endloses Zugmittel angetrieben wird. Das Aggregat steht über eine Feststellschraube mit einer Klemmhülse in Verbindung, in der eine Mutter drehbar gelagert ist. Die Mutter wird von einer an der Brennkraftmaschine angelenkten Gewindespindel durchsetzt. Gewindespindel und Mutter bilden ein Schraubgelenk, das bei gelöster Klemmhülse zur Einstellung der Spannung des endlosen Zugmittels dient. Da die auf die Klemmhülse einwirkende Feststellschraube quer zur Achse der Gewindespindel gerichtet ist, sind Handhabungen einerseits zum Betätigen der Spannschraube und andererseits zum Betätigen der Mutter zur Einstellung der vorgesehenen Spannung für das endlose Zugmittel in zwei zueinander quergerichteten Ebenen erforderlich. Diese zueinander quergerichteten Handhabungsebenen erfordern wiederum einen relativ großen Platzbedarf.

Weiter ist aus der EP-C 0 050 238 eine Einstellvorrichtung bekannt, bei der ein Einstellelement und eine Feststellschraube gleichachsig angeordnet sind. Das bekannte Einstellelement ist als Zahnrad ausgebildet, das mit einer Zahnstange an einer Spannlasche zusammenwirkt.

Ferner ist das Einstellelement mit einem Schlüssel-Eingriffsprofil ausgebildet, so daß mit Schlüsseln zum Eingriff am Einstellelement und an der Feststellschraube diese in zueinander parallelen Handhabungsebenen bedient werden können. Zwar sind Einstellelement und Spannschraube gleichachsig angeordnet, sie bilden jedoch kein der Einstellung dienendes Schraubgelenk.

Der Erfindung liegt die Aufgabe zugrunde, die Einstellvorrichtung der gattungsgemäßen Bauart einschließlich der Kippverbindung des lageverstellbaren Bauteiles so anzuordnen und auszubilden, daß bei einfacher Handhabung der zum Einstellen erforderlichen Werkzeuge diese im wesentlichen in einer Ebene (Handhabungsebene) in Eingriff mit dem jeweiligen Element bringbar und/oder betätigbar sind.

Diese Aufgabe wird mit den kennzeichnenden Merkmalen des Hauptanspruches gelöst. Die erfindungsgemäße Anordnung des Schraubgelenkes in einer gemeinsamen Kippebene mit der im gelockerten Zustand als Kippverbindung und ansonsten der Feststellung dienenden Schraubverbindung des lageverstellbaren Bauteiles ergibt in vorteilhafter Weise eine im wesentlichen gemeinsame Handhabungsebene für die anzusetzenden Werkzeuge. Dies ist insbesondere bei schmalem, lediglich steckbare Werkzeuge zulassenden Einbauraum von Vorteil. Damit ist eine mehrfunktionale Verbindung von Bauteilen zumindest durch Fertigungsautomaten vormontierbar.

Weitere vorteilhafte Ausgestaltungen sind in den Unteransprüchen beschrieben. In einer bevorzugten Ausgestaltung ist das Schraubgelenk als eine in einer Gewinde-Durchgangsbohrung im einzustellenden Bauteil drehbeweglich angeordnete Gewindebuchse ausgebildet. Erreicht ist damit ein Einstellelement, das keinen zusätzlichen Bauraum benötigt. Weist die Gewindebuchse ferner ein Innensechskant auf und wird sie schließlich von einem weiteren Halte-Schraubbolzen durchsetzt, so ist damit in vorteilhafter Weise eine kompakte Einstellvorrichtung kombiniert mit einer Halteeinrichtung geschaffen. Ferner kann die als Kippverbindung dienende Schraubverbindung bei im Bogenmaß geringfügiger Veränderung am Ende eines Einstellvorganges die Schraubverbindung wieder unmittelbar gegen das lageverstellte Bauteil verspannt werden. Damit ist eine im Aufbau einfache Halteeinrichtung geschaffen. Sind dagegen im Bereich des als Kippverbindung dienenden Schraubbolzens relativ große Lageabweichungen zu erwarten, werden Zwischenelemente zur selbsttätigen Ausrichtung von Auflageflächen vorgesehen. Für diesen Fall kann auch die Gewindebuchse mit einer balligen oder kegeligen Auflagefläche versehen sein.

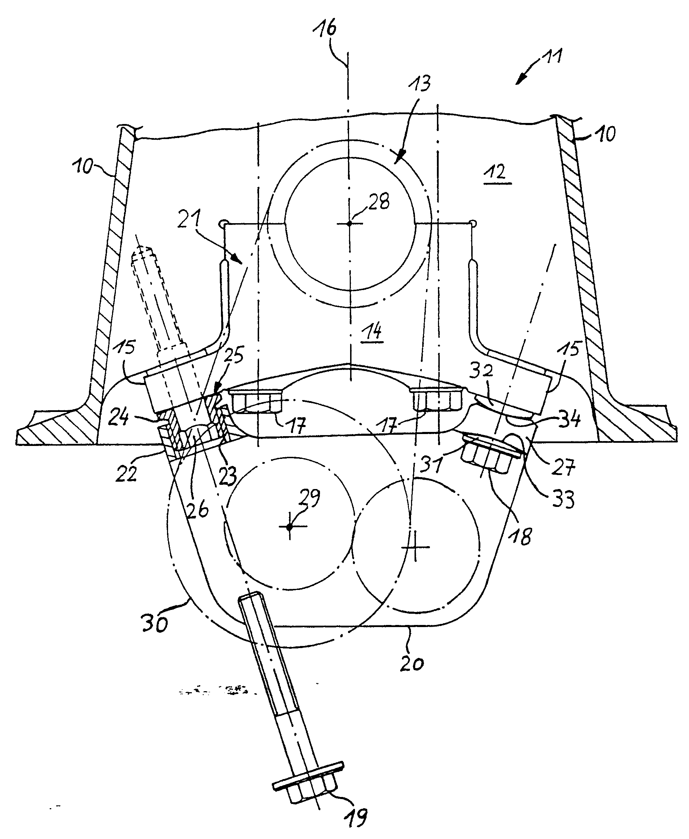

Die Erfindung ist anhand eines in der Zeichnung dargestellten Ausführungsbeispiels beschrieben.

In einer Seitenwände 10 eines Kurbelgehäuses 11 einer nicht näher dargestellten Brennkraftmaschine verbindenden Querwand 12 ist ein Kurbelwellenlager 13 angeordnet. Das Kurbelwellenlager 13 umfaßt einen Lagerdeckel 14 mit Flanschlappen 15, der über zur Maschinenlängsmittelebene 16 parallele Schraubbolzen 17 als auch über zur Maschinenlängsmittelebene 16 geneigt angeordnete und die Flanschlappen 15 durchsetzende Schraubbolzen 18, 19 an der Querwand 12 gehalten ist. Die äußeren Schraubbolzen 18 und 19 dienen zusätzlich zur Halterung einer am Lagerdeckel 14 aufgesattelten Schmierölpumpe 20, die über ein Hüllgetriebe 21 von einer nicht gezeigten Kurbelwelle angetrieben wird.

Die Schmierölpumpe 20 weist einen Halteflansch 22 mit einer Gewinde-Durchgangsbohrung 23 auf. In der Gewinde-Durchgangsbohrung 23 ist eine Gewindebuchse 24 drehbeweglich angeordnet. Die Gewindebuchse 24 liegt über eine ballige oder kegelige Auflagefläche 25 am zugeordneten Flanschlappen 15 des Lagerdeckels 14 an. Am entgegengesetzten Ende ist die Gewindebuchse 24 mit einem Innensechskant 26 ausgestattet. Die Gewindebuchse 24 bildet mit der Gewinde-Durchgangsbohrung 23 ein Schraubgelenk, das als Einstellelement für die gewünschte Spannung des endlosen Zugmittels in dem Hüllgetriebe 21 dient. Hierfür wird der einen Halteflansch 27 der Schmierölpumpe mit Spiel durchsetzende Schraubbolzen 18 geringfügig gelockert. Durch anschließendes Drehen der Gewindebuchse 24 mittels eines mit dem Innensechskant 26 in Eingriff gebrachten Werkzeuges kippt die Schmierölpumpe 20 um die gelockerte Schraubverbindung mit dem Schraubbolzen 18. Bei entsprechender Drehung der Gewindebuchse 24 wird der Abstand zwischen der Achse 28 der nicht gezeigten Kurbelwelle und der Achse 29 des lediglich schematisch angezeigten Antriebsrades 30 vergrößert und damit das endlose Zugmittel des Hüllgetriebes 21 gespannt. Ist die gewünschte Spannung im endlosen Zugmittel des Hüllgetriebes 21 erreicht, wird der lediglich geringfügig gelockerte Schraubbolzen 18 angezogen.

Um das Ausmaß der für das Spannen des endlosen Zugmittels des Hüllgetriebes 21 dienenden Kippbewegung in der Schraubverbindung mit dem Schraubbolzen 18 möglichst klein zu halten, wird die Drehachse 29 des Hüllgetrieberades 30 in einer größtmöglichen Entfernung von der als Kippverbindung dienenden Schraubverbindung mit dem Schraubbolzen 18 angeordnet. Bei geringfügigem Kippmaß des Halteflansches 27 der Schmierölpumpe 20 relativ zum Flanschlappen 15 und zur Spannfläche am Schraubbolzen 18 kann dieser nach Abschluß des Einstellvorganges unmittelbar ohne eine korrigierende Zwischenlage gegen den Halteflansch 27 bzw. dieser gegen den Flanschlappen 15 verspannt werden. Wurde während der Einstellung die Lockerung des Schraubbolzen 18 auf einem Minimalmaß gehalten, so isy mit der vorbeschriebenen, unmittelbaren Verspannung über den Schraubbolzen 18 eine Verringerung der eingestellten Spannung des Zugmittels im Hüllgetriebe 21 vermieden. Treten dagegen im Bereich des als Kippverbindung dienenden Schraubbolzens 18 größere Kippbewegungen auf, die nicht mehr durch Materialelelastizität aufgefangen werden können, sind vom Schraubbolzen 18 mit Spiel durchsetzte Zwischenelemente 31 und 32 vorgesehen. Die Zwischenelemente 31 und 32 sind auf dem Schraubbolzen 18 mit einander zugekehrten gewölbten Auflageflächen 33, 34 versehen, zwischen denen sich der Halteflansch der Schmierölpumpe 20 bei gelockertem Schraubbolzen 18 selbsttätig ausrichten kann. Schließlich wird der für die Verschraubung des Lagerdeckels 14 dienende Schraubbolzen 19 die Gewindebuchse durchsetzend angeordnet und in der Querwand 12 verschraubt. Die gleichachsige Anordnung des aus einer in einer Gewinde-Durchgangsbohrung 23 angeordneten Gewindebuchse 24 gebildeten Schraubgelenkes mit dem zur weiteren Halterung der einzustellenden Schmierölpumpe 20 dienenden Schraubbolzen 19 ergibt eine kompaktbauende Einstell- und Haltevorrichtung. Wird weiter der im gelockerten Zustand als Kippverbindung für die Schmierölpumpe 20 dienende Schraubbolzen 18 mit der vorgenannten Einstell- und Haltevorrichtung im wesentlichen in einer gemeinsamen Kippebene angeordnet, können beispielsweise in Anwendung kommende Steckwerkzeuge zur Einwirkung auf die Schraubbolzen 18 und 19 sowie auf die Gewindebuchse 24 in einer Ebene gehandhabt werden. Neben einer Vereinfachung in der Handhabung ist die vorbeschriebene Einstellvorrichtung ferner bei geringem Einbauraum mit unzulänglicher Zugänglichkeit für das Werkzeug zusätzlich geeignet. Insbesondere ist sie damit auch geeignet für die Anwendung von Fertigungsautomaten.

## Ansprüche

1. Einstellvorrichtung für ein lageverstellbares, mit einem Getriebeelement ausgerüstetes Bauteil einer Spannvorrichtung für Hüllgetriebe, insbesondere Kettenspannvorrichtung für eine im Kurbelgehäuse einer Hubkolben-Brennkraftmaschine angeordnete Schmierölpumpe,
   - wobei das lageverstellbare Bauteil (Schmierölpumpe 20) mit einem stationären Bauteil (Lagerdeckel 14 bzw. Querwand 12) in kippbeweglicher Verbindung steht mit einer zur Ebene des Hüllgetriebes (21) im wesentlichen parallelen Kippebene, und
   - weiter beide Bauteile (20;14 bzw. 12) über ein von der kippbeweglichen Verbindung beabstandetes, als Einstellelement dienendes Schraubgelenk (Gewindebuchse 24 in Gewindedurchgangsbohrung 23) zusammenwirken,

- wobei das in der Kippebene angeordnete Schraubgelenk (24,23) ein Werkzeug-Eingriffsprofil (Innensechskant 26) aufweist, dadurch gekennzeichnet,
- daß zwei im wesentlichen parallel zur Kippebene gegenseitig beabstandet angeordnete Schraubbolzen (18,19) einerseits der Halterung des lageverstellbaren Bauteiles (20) am stationären Bauteil (14 bzw. 12) dienen,
- daß die das lageverstellbare Bauteil (20) mit Spiel durchsetzenden Schraubbolzen (18,19) andererseits in gelockertem Zustand als kippbewegliche Verbindung zur relativen Einstellung des lageverstellbaren Bauteiles (20) gegenüber dem stationären Bauteil (14 bzw. 12) dienen, wobei
- einem der Schraubbolzen (19) ein gesondertes, zum vorbestimmten Kippen des lageverstellbaren Bauteiles vorgesehenes Schraubgelenk (Gewindebuchse 24 in Gewindedurchgangsbohrung 23) benachbart angeordnet ist, und
- ferner das Maß des jeweiligen Spiels für die durchsetzenden Schraubbolzen (18,19) im lageverstellbaren Bauteil (20) entsprechend einer vorbestimmten Kippbewegung desselben um eine zum anderen Schraubbolzen (18) quergerichtete Kippachse gewählt ist.

2. Einstellvorrichtung nach Anspruch 1, dadurch gekennzeichnet, daß das Schraubgelenk eine in einer Gewindedurchgangsbohrung (23) im lageverstellbaren bzw. einzustellenden Bauteil drehbeweglich angeordnete Gewindebuchse (24) umfaßt, die im bohrungsseitigen Endbereich ein Innensechskant (26) als Werkzeug-Eingriffsprofil aufweist.

3. Einstellvorrichtung nach Anspruch 1 und 2, dadurch gekennzeichnet, daß eine für eine zusätzliche Halterung des einzustellenden Bauteiles (Schmierölpumpe 20) dienende Schraubverbindung einen die Gewindebuchse (24) im wesentlichen gleichachsig und mit Spiel durchsetzenden Schraubbolzen (19) für einen Gewindeeingriff im stationären Bauteil (Querwand 12) umfaßt.

4. Einstellvorrichtung nach den Ansprüchen 1 - 3, dadurch gekennzeichnet,
- daß die als kippbewegliche Verbindung dienende Schraubverbindung vom Schraubbolzen (18) mit Spiel durchsetzte Zwischenelemente (31,32) mit gewölbten oder balligen Auflageflächen (33,34) zur selbst-tätigen Ausrichtung des einzustellenden Bauteiles (Schmierölpumpe 20) umfaßt, und
- daß die die Gewindebuchse (24) an ihrem dem stationären Bauteil (Flanschlappen 15) zugeordneten Ende eine ballige oder kegelige Auflagefläche (25) aufweist.

## Claims

1. An adjusting device for a positionally - adjustable component, equipped with a gear element, of a tensioning device for belt-drive gear, in particular a chain tensioning device for a lubricating oil pump arranged in the crankcase of a reciprocating-piston internal-combustion engine,
   - in which the positionally - adjustable component (lubricating oil pump 20) is connected, so as to be movable in a tilting manner, with a stationary component (bearing cover 14 or respectively transverse wall 12), with a tilting plane substantially parallel to the plane of the belt-drive gear (21), and
   - in addition, both components (20; 14 or respectively 12) cooperate via a screw joint (threaded bush 24 in a threaded through - bore 23) serving as an adjusting element and at a distance from the connection which is movable in a tilting manner,
   - in which the screw joint (24,23) arranged in the tilting plane has a tool engagement section (hexagonal recess 26), characterised in that
   - two screw bolts (18,19), arranged at a reciprocal distance substantially parallel to the tilting plane, serve on the one hand to hold the positionally-adjustable component (20) against the stationary component (14 or respectively 12),
   - the screw bolts (18,19), penetrating the positionally adjustable component (20) with play, on the other hand in loosened state serve as a tiltably-movable connection for the relative adjustment of the positionally-adjustable component (20) with respect to the stationary component (14 or respectively 12), wherein
   - there is arranged adjacent to one of the screw bolts (19) a separate screw joint (threaded bush 24 in threaded through bore 23) for the predetermined tilting of the positionally adjustable component, and

- additionally, the extent of the respective play for the penetrating screw bolt (18,19) in the positionally adjustable component (20) is selected according to a predetermined tilting movement thereof about a tilting axis directed transversely to the other screw bolt (18).

2. An adjusting device according to Claim 1, characterised in that the screw joint comprises a threaded bush (24) arranged so as to be movable rotatably in a threaded through bore (23) in the component which is positionally adjustable or, respectively, which is to be adjusted, which threaded bush has a hexagonal recess (26) as a tool-engagement section in the end region on the bore side.

3. An adjusting device according to Claims 1 and 2, characterised in that a screw connection serving for an additional holding of the component which is to be adjusted (lubricating oil pump 20) comprises a screw bolt (19), penetrating the threaded bush (24) substantially coaxially and with play, for a threaded engagement in the stationary component (transverse wall 12).

4. An adjusting device according to Claims 1 - 3, characterised in that
   - the screw connection, serving as a tiltably - movable connection, comprises intermediate elements (31,32), penetrated by the screw bolt (18) with play, with curved or crowned bearing surfaces (33,34) for the automatic alignment of the component which is to be adjusted (lubricating oil pump 20), and
   - the threaded bush (24) at its end associated with the stationary component (flange lug 15) has a crowned or tapered bearing surface (25).

**Revendications**

1. Dispositif de réglage d'une pièce constitutive réglable, équipée d'une transmission, d'un dispositif de tension pour transmission flexible, notamment dispositif de tension de chaîne pour une pompe à huile disposée dans le carter d'un moteur à combustion interne,
   - dans lequel la pièce réglable (pompe à huile 20) est en fixation basculable avec une pièce fixe (chapeau de palier 14 ou paroi transversale 12), dans un plan de basculement essentiellement parallèle au plan de la transmission flexible (21), et
   - en outre, les deux pièces constitutives (20 ; 14 ou 12) coopérant par une articulation vissée, servent d'éléments de mise en place, à une certaine distance de la fixation basculable (douille filetée 24 dans le perçage de passage fileté 23),
   - l'articulation vissée (24, 23) placée dans le plan de basculement, présentant un profil de prise pour un outil (six pans creux 26), caractérisé en ce que :
   - deux vis (18, 19) disposées avec un écartement essentiellement parallèle au plan de basculement servent, d'une part, à la fixation de la pièce constitutive (20) réglable sur la pièce fixe (14 ou 12),
   - et que, d'autre part, les vis (18, 19) traversant avec du jeu la pièce constitutive réglable (20) servent de fixation de basculement pour la mise en place relative de la pièce réglable (20) par rapport à 1 pièce fixe (14 ou 12),
   - en plaçant une articulation vissée particulière pour permettre un basculement prédéterminé de la pièce réglable (douille filetée 24 dans le perçage traversant 23) à proximité de la vis (19), et
   - en choisissant l'amplitude de chaque jeu pour les vis traversantes (18, 19) dans la pièce réglable (20) en fonction d'un mouvement de basculement prédéterminé sur un axe de basculement dirigé transversalement par rapport à l'autre vis (18).

2. Dispositif de réglage selon la revendication 1, caractérisé en ce que l'articulation vissée comprend une douille filetée (24) pouvant tourner dans un perçage traversant fileté (23) de la pièce constitutive réglable ou à mettre en place, qui comprend à l'extrémité du côté du perçage un six pans creux (26) comme profil d'insertion d'outil.

3. Dispositif de réglage selon les revendications 1 et 2, caractérisé en ce qu'une fixation vissée servant de fixation supplémentaire à la pièce à mettre en place (pompe à huile 20) comprend une vis (19) traversant la douille filetée avec du jeu et ayant essentiellement le même axe, pour une prise vissée dans la pièce fixe (paroi transversale 12).

4. Dispositif de réglage selon les revendications 1 à 3, caractérisé en ce que :
   - la fixation vissée servant de fixation basculable comprend des éléments intermédiaires (31, 32) traversés avec jeu par une vis (18) avec des surfaces d'appui (33, 34) bombées ou sphériques (33, 34) pour orienter automatiquement la pièce à mettre en place (pompe à huile 20), et

- l'extrémité de la douille filetée (24) dirigée vers la pièce constitutive fixe (bride 15) présente une surface d'appui bombée ou conique (25).